Europäisches Patentamt

European Patent Office

Office européen des brevets

(11) Numéro de publication: **0 171 856 B1**

# FASCICULE DE BREVET EUROPEEN

(45) Date de publication de fascicule du brevet: **14.07.93** (51) Int. Cl.5: **G06F 15/16**

(21) Numéro de dépôt: **85201272.3**

(22) Date de dépôt: **06.08.85**

(54) **Processeur pour le traitement de signal et structure de multitraitement hiérarchisée comportant au moins un tel processeur.**

(30) Priorité: **14.08.84 FR 8412800**

(43) Date de publication de la demande:
**19.02.86 Bulletin 86/08**

(45) Mention de la délivrance du brevet:
**14.07.93 Bulletin 93/28**

(84) Etats contractants désignés:
**BE CH DE FR GB IT LI NL SE**

(56) Documents cités:
**EP-A- 0 057 511**
**FR-A- 2 425 113**
**US-A- 4 096 566**

**NACHRICHTENTECHNIK-ELEKTRONIK, vol. 29, no. 6, 1979, pages 229-232, Berlin, DD; W. CIMANDER et al.: "Mehrmikrorechnersysteme mit Registerkopplung"**

**DIGEST OF PAPERS SPRING COMPCON 1979, San Francisco, 26 février - 1 mars 1979, pages 98-101, IEEE, New York, US; K. TANABE et al.: "16-Bit microprocessor with dual bus architecture for multi-microprocessor system"**

(73) Titulaire: **TELECOMMUNICATIONS RADIOE-LECTRIOUES ET TELEPHONIOUES T.R.T.
88, rue Brillat Savarin
F-75013 Paris(FR)**

(84) Etats contractants désignés:
**BE CH DE GB IT LI NL SE**

(73) Titulaire: **TRT TELECOMMUNICATIONS RA-DIOELECTRIOUES ET TELEPHONIOUES
88 rue Brillat Savarin
F-75013 Paris(FR)**

(84) Etats contractants désignés:
**FR**

(72) Inventeur: **Mary, Luc
SOCIETE CIVILE S.P.I.D. 209 rue de l'Université
F-75007 Paris(FR)**
Inventeur: **Barazesh, Bahman
SOCIETE CIVILE S.P.I.D. 209 rue de l'Université
F-75007 Paris(FR)**

(74) Mandataire: **Chaffraix, Jean et al
Société Civile S.P.I.D. 156, Boulevard Haussmann
F-75008 Paris (FR)**

EP 0 171 856 B1

Rank Xerox (UK) Business Services
(3.10/3.6/3.3.1)

1978 WESCON TECHNICAL PAPERS, vol. 22, Los Angeles, 12-14 septembre 1978, pages 1-13, Electronic Conventions Inc., New York, US; M. WILES et al.: "Multi-microcomputer and distributed architecture systems with the MC6801 single chip microcomputer"

## Description

La présente invention concerne un processeur pour le traitement du signal prévu pour être intégré en un seul module et destiné à être associé à d'autres circuits de traitement de signal (notamment d'autres processeurs) pour former une structure de multitraitement hiérarchisée, comme cité dans la préambule de la revendication 1.

L'invention concerne aussi une structure de multitraitement hiérarchisée comportant au moins un tel processeur.

Dans les appareils utilisés dans les télécommunications, par exemple dans les modems pour transmission de données, on effectue un traitement numérique du signal et la tendance actuelle est de réaliser toutes les fonctions requises à l'aide de processeurs programmables. Le traitement numérique du signal est caractérisé par des opérations arithmétiques (addition, soustraction, multiplication, division) exécutées de façon répétitive sur des structures de données relativement simples. Les microprocesseurs d'usage général ne sont pas adaptés au traitement numérique du signal, en raison principalement de leur faible performance en vitesse d'exécution et de l'inéquation de leur architecture et de leur jeu d'instructions.

On trouve sur le marché des processeurs entièrement intégrés qui sont orientés vers le traitement du signal et qui se distinguent des microprocesseurs d'usage général par leur temps d'exécution des instructions qui est de l'ordre de 250 ns, par le degré élevé de parallélisme interne des opérations et par un jeu d'instructions adapté aux calculs à effectuer et comportant notamment la multiplication.

Mais pour réaliser toutes les fonctions requises telles que par exemple dans un modem l'émission, la réception, l'égalisation, l'annulation d'écho, il est le plus souvent nécessaire d'associer en structure hiérarchisée plusieurs boîtiers processeurs de signaux pour répartir les tâches à effectuer.

Dans l'article intitulé : "Mehrmikrorechnersysteme mit Registerkopplung" de W.Cimander, et A. Tschelebiev, paru dans Nachrichtentechnik-Electronik, 1979, vol. 29, No.6, pages 229-232, on décrit une structure dans laquelle un circuit maître (un processeur maître) pilote une pluralité de circuits esclaves (processeurs esclaves). Il y est préconisé d'utiliser des mémoires tampons entre le circuit maître et les circuits esclaves, pour faciliter l'échange des données entre ces circuits maître et esclaves. Cependant la structure décrite ne se prête pas à une structure hiérarchisée à plusieurs niveaux.

Une autre structure utilisée pour le traitement du signal est décrite par exemple dans le brevet américain 4 096 566. Dans cette autre structure, chaque processeur est formé de plusieurs modules, un module de commande et un module de calcul reliés à un bus de données interne et un module adaptateur de bus pour la liaison avec un autre processeur. Chaque module de commande peut accomplir une fonction de commande et peut lui-même être un esclave pour une unité de commande d'un niveau supérieur. Dans cette structure connue, un seul bus interne relie l'adaptateur de bus du processeur maître à l'adaptateur de bus du processeur esclave, ce qui ne permet pas l'indépendance entre les données échangées par un processeur avec son processeur maître et son processeur esclave. Les échanges de données entre processeurs maître et esclave sont effectués à l'aide d'une procédure d'interruption qui procure une perte de temps indésirable.

Pour éviter ces inconvénients, un processeur du genre cité dans le préambule est remarquable en ce que le circuit séquentiel fournit des signaux de disponibilité comme citées dans la partie caractérisante de la revendication 1.

Ainsi avec un seul type de processeur il est possible d'établir une structure hiérarchisée de forte arborescence puisque la partie MAITRE d'un processeur peut se raccorder à des parties ESCLAVES d'autres processeurs.

Selon notre invention, le circuit séquentiel engendre directement des signaux d'occupation, directement accessibles. Ainsi, on obtient l'avantage supplémentaire que, au gré de l'utilisateur, ces signaux peuvent provoquer des interruptions déclenchant des programmes sans qu'il soit nécessaire d'effectuer des tests sur la valeur de ces signaux.

Il va de soi que toutes les mesures données pour l'invention sont compatibles avec un nombre limité de broches (typiquement 48) lorsque le processeur est réalisé en un seul module, ce qui permet une fabrication bon marché.

La description suivante accompagnée des dessins ci-annexés, le tout donné à titre d'exemple non limitatif fera bien comprendre comment l'invention peut être réalisée.

La figure 1 représente un processeur conforme à l'invention.

La figure 2 représente un premier exemple de structure hiérarchisée conforme à l'invention.

La figure 3 représente un deuxième exemple de structure hiérarchisée conforme à l'invention.

La figure 4 représente un troisième exemple de structure hiérarchisée conforme à l'invention.

La figure 5 représente un quatrième exemple de structure hiérarchisée conforme à l'invention.

EP 0 171 856 B1

La figure 6 représente le détail de réalisation du circuit séquentiel de commande.

La figure 7 est un schéma représentant les états du circuit séquentiel de la figure 6.

La figure 8 est un diagramme-temps pour le mode de connexion VE.

La figure 9 est un ordinogramme représentant les échanges entre un circuit maître et une partie esclave dans le mode VE.

La figure 10 est un diagramme-temps pour le mode de connexion PE.

La figure 11 représente les modifications à apporter à l'ordinogramme de la figure 9 lorsqu'on est dans le mode de connexion PE.

La figure 12 représente un organe de traitement convenant bien pour le processeur de l'invention.

La figure 13 représente les connexions entre cet organe de traitement de la figure 12 et des accès à l'extérieur.

La figure 14 montre un diagramme-temps d'échanges sur une ligne où le processeur est maître.

La figure 15 montre un diagramme-temps d'échange avec une mémoire.

La figure 16 montre le processeur et ses 48 broches.

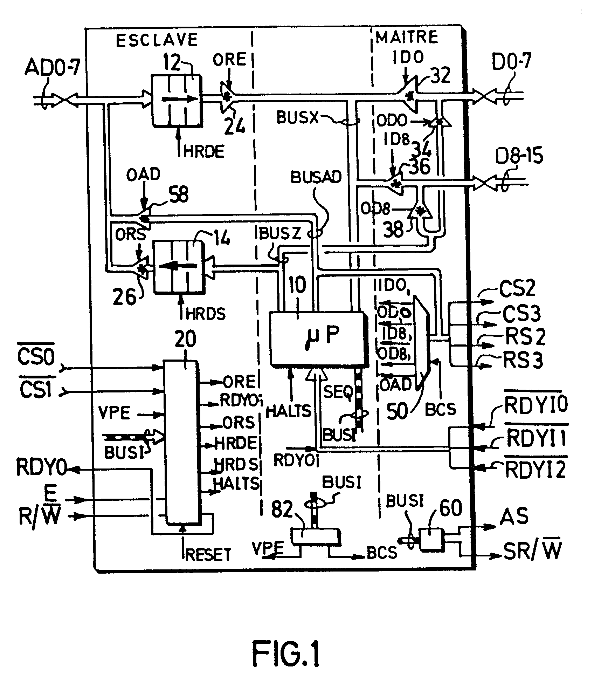

Le processeur de l'invention montré à la figure 1 est constitué à partir d'un organe de traitement de signal 10. Cet organe comprend notamment, comme cela sera décrit plus loin : une unité arithmétique et logique, des mémoires vives, une mémoire-programme contenant des instructions sur le traitement à effectuer et un séquenceur qui ordonne les différentes opérations à effectuer. Les instructions sont véhiculées par une ligne à plusieurs fils BUSI, des codes d'adresses, par une ligne BUSAD ; des données entrantes peuvent être transmises par une ligne BUSX et les données sortantes par une ligne BUSZ. Le déroulement du programme à l'intérieur de l'organe 10 peut être modifié par des signaux appliqués à son entrée SEQ agissant sur un circuit de commande du séquenceur. Le processeur de la figure 1 est en pratique réalisé en un seul module comportant un nombre limité de broches (typiquement 48). Parmi ces broches on distingue trois séries de huit accès portant les références AD0-7, D0-7 et D8-15. Ces accès sont utilisés pour la transmission de l'information dans les deux sens - c'est-à-dire qu'à partir de ces accès on peut émettre des informations vers d'autres circuits et aussi en recevoir de ces même circuits. D'autres broches sont utilisées pour émettre différents signaux CS2, CS3, RS2, RS3, RDY0, AS et SR/$\overline{\text{W}}$ et aussi pour recevoir des signaux $\overline{\text{CS0}}$, $\overline{\text{CS1}}$, E, R/$\overline{\text{W}}$, $\overline{\text{RDYI0}}$, $\overline{\text{RDYI1}}$ et $\overline{\text{RDYI2}}$.

Conformément à l'invention, pour permettre des connexions avec d'autres circuits de traitement, le processeur de la figure 1 comporte une partie ESCLAVE munie des accès AD0-7 pour être notamment raccordé à un circuit de traitement de signal MAITRE, d'une mémoire tampon d'entrée 12(par exemple une mémoire de type FIFO ou autre) dans lequel les données provenant du circuit de traitement MAITRE par l'accès AD0-7 peuvent être inscrites et lues pour être traitées par l'organe de traitement, d'une mémoire tampon de sortie 14(par exemple une mémoire de type FIFO ou autre) dans lequel les données traitées par l'organe de traitement 10 peuvent être inscrites, puis lues pour être dirigées par l'intermédiaire de l'accès AD0-7 vers le circuit de traitement MAITRE et d'un circuit séquentiel de commande 20 pour que l'accès à ces registres soit affecté (tour à tour par exemple) audit organe de traitement et audit circuit de traitement MAITRE.

L'ensemble des registres 12 et 14 pourra être, dans la suite de l'exposé, qualifié de "boîte aux lettres" ce qualificatif montrant bien la fonction des registres 12 et 14. Les registres 12 et 14 sont formés chacun de trois registres élémentaires de huit bits montés en cascade ; l'apparition d'un signal d'horloge HRDE pour le registre 12 et HRDS pour le registre 14 provoque le décalage des données d'un registre élémentaire à l'autre.

Le circuit séquentiel 20 élabore différents signaux pour la gestion de la "boîte aux lettres" outre les signaux HRDE et HRDS, il fournit les signaux ORE et ORS pour des amplificateurs à trois états 24 et 26 pour les mettre à l'état passant ou à l'état haute impédance, un signal RDYO en direction du circuit de traitement connecté à cette partie ESCLAVE et aussi des signaux HALTS et $\overline{\text{RDYOi}}$ pour l'organe de traitement 10 faisant partie du même module que ce circuit séquentiel. Les amplificateurs 24 et 26 sont connectés aux sorties des registres 12 et 14.

Le signal HALTS à l'état actif commande l'arrêt de l'organe 10. Pour élaborer ces signaux, le circuit séquentiel 20 utilise les signaux transmis par la ligne BUSI des signaux présents aux broches $\overline{\text{CS0}}$, $\overline{\text{CS1}}$, E et R/$\overline{\text{W}}$, ainsi qu'un signal VPE.

Un processeur conforme à l'invention peut aussi être maître et pour cela il comporte aussi une partie MAITRE comportant les accès D0-7, D8-15 connectables aux lignes de données BUSX et BUSZ au moyen de circuits amplificateurs à trois états 32, 34, 36 et 38 munis de commandes ID0, OD0, ID8 et OD8. Ces commandes sont simplement élaborées par un décodeur 50 connecté à la ligne BUSAD. Ce décodeur 50 fournit aussi un signal OAD pour la commande à l'état passant d'un amplificateur à trois états 58. Ainsi par logiciel l'organe de traitement peut par des instructions convenables se connecter aux accès D0-7 et D8-15.

4

Par les signaux CS2, CS3, RS2, RS3 il est possible de sélectionner des circuits de traitement esclaves ; les signaux RDYI0, RDYI1 et RDYI2 permettent de tester la disponibilité des circuits de traitement esclaves. Les signaux $\overline{RDYI0}$, $\overline{RDYI1}$ et $\overline{RDYI2}$ ainsi que le signal $\overline{RDYOi}$ sont appliqués à l'entrée SEQ de commande du séquenceur de l'organe 10. Un circuit de validation 60 fournit des signaux AS et SR/$\overline{W}$ ; le signal AS valide les adresses dans le cas où les données fournies en D0-7 ou D8-15 sont des codes d'adresse et le signal SR/$\overline{W}$ gouverne l'enregistrement et la lecture des données dans un circuit esclave lointain connecté aux accès D0-7 et D8-15. Ce circuit de validation 60 est commandé par les instructions transmises par la ligne BUSI.

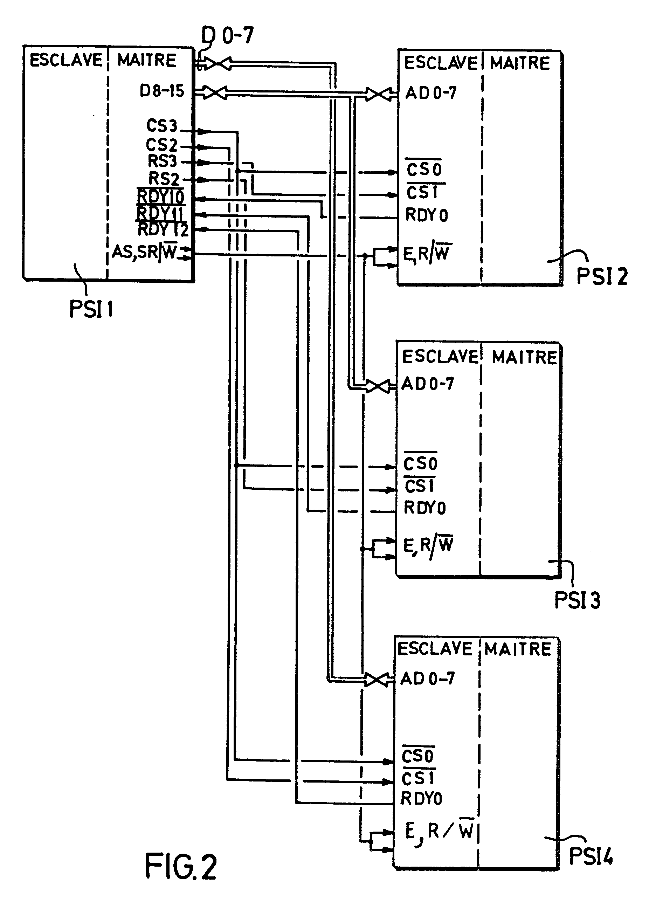

La figure 2 montre un premier exemple de structure de multitraitement comportant au moins le processeur décrit à la figure 1 ; cette structure est composée de quatre processeurs conformes à l'invention portant les références respectives PSI1, PSI2, PSI3 et PSI4 ; les accès AD0-7 du côté MAITRE du processeur PSI1 sont connectés aux accès AD0-7 du PIS4 ; les accès D8-15 du processeur PSI1 sont connectés aux accès AD0-7 des processeurs PSI2 et PSI3 ; les signaux de validation et d'écriture-lecture AS, SR/$\overline{W}$ du processeur PSI1 sont appliqués aux entrées E, R/$\overline{W}$ de tous les processeurs PSI2, PSI3 et PSI4. Les sorties RDYO des processeurs PSI2, PSI3 et PSI4 sont respectivement connectées aux entrées $\overline{RDYI0}$, $\overline{RDYI1}$ et $\overline{RDYI2}$ du processeur PSI1. Ces signaux aux sorties CS3, CS2, RS3, RS2 servent à sélectionner l'un des processeurs PSI2, PSI3 et PSI4 lors du processus d'échange d'informations entre l'un des processeurs PSI2, PSI3 et PSI4 et le processeur PSI1.

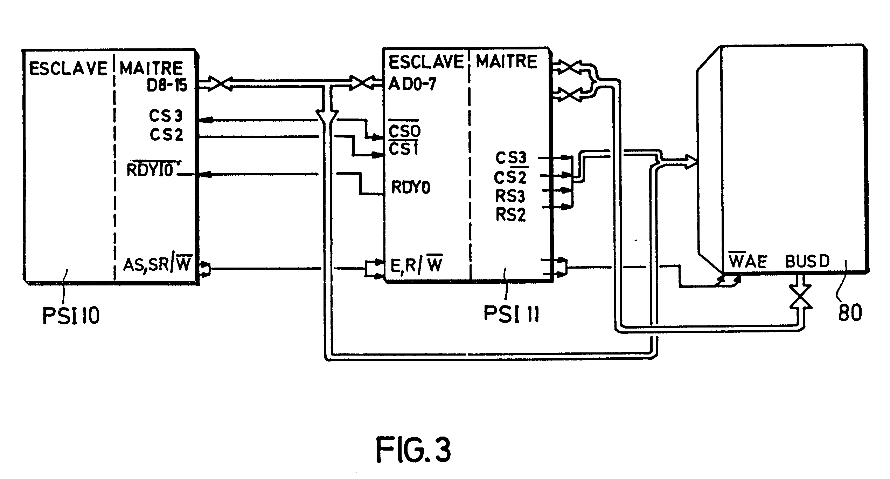

Un deuxième exemple de structure est montré à la figure 3 ; cette structure comporte deux processeurs PSI 10 et PSI 11 conformes à l'invention et une mémoire vive (mémoire RAM). On doit noter qu'ici les accès AD0-7 de la partie ESCLAVE du processeur PSI11 sont utilisés soit pour la transmission d'informations entre lui et le processeur PSI10, soit pour la transmission de code d'adresse pour la mémoire 80. Le champ d'adresse de la mémoire 80 est encore augmenté dans cet exemple par les signaux $\overline{CS3}$, $\overline{CS2}$ RS3 et RS2, ce qui étend la capacité d'adressage à 8 + 4 soit 12 bits (c'est-à-dire 4 k) ; de plus les accès D0-7 et D8-15 sont concaténés pour être reliés au bus de données BUSD de la mémoire 80 organisée en mot de 16 bits ; les signaux AS, SR/$\overline{W}$ du processeur PSI11 sont appliqués à l'entrée de commande d'écriture $\overline{W}$ et à l'entrée AE pour mettre en état de passage en basse impédance la sortie de la mémoire 80, étant admis que celle-ci est du type statique. Les broches CS3, CS2 du processeur PSI10 sont reliées aux broches $\overline{CS0}$, $\overline{CS1}$ du processeur PSI11 et les broches AS, SR/$\overline{W}$ du PSI10 aux broches E, R/$\overline{W}$ du PSI11. Les broches RDY0 et RDYI0 des processeurs PSI11 et PSI10 sont interconnectées.

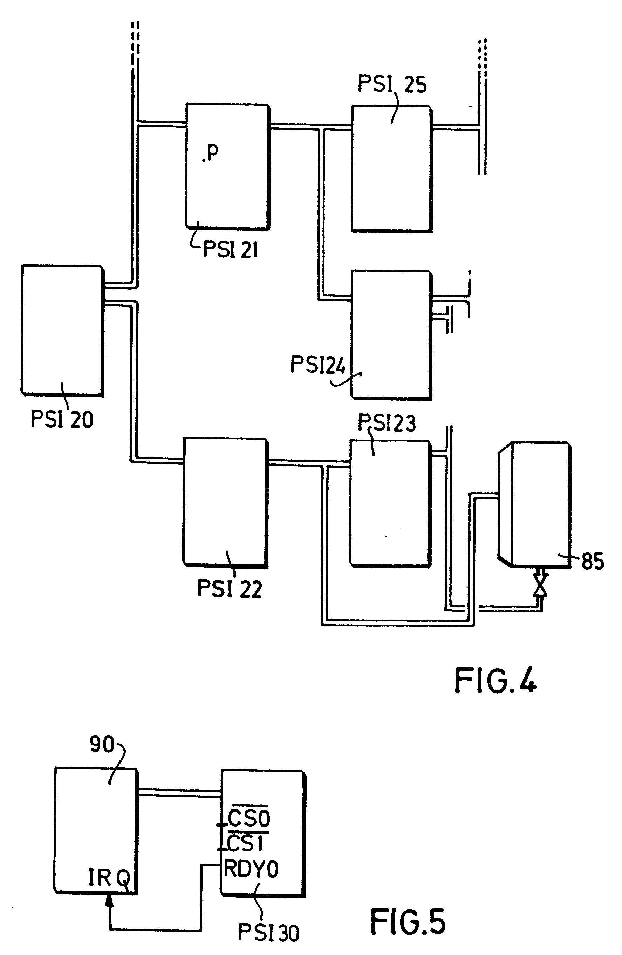

Le processeur de l'invention permet des structures hiérarchisées arborescentes comme cela est représenté à la figure 4. La partie MAITRE du processeur PSI20 peut être raccordée aux parties ESCLAVE des processeurs PSI21 et PSI22 dont les parties MAITRE peuvent à leur tour être connectées aux parti es ESCLAVE d'autres processeurs. Le processeur PSI21 est relié aux processeurs PSI25 et PSI24. Le processeur PSI22 est relié au processeur PSI23 qui peut adresser en outre une mémoire 85.

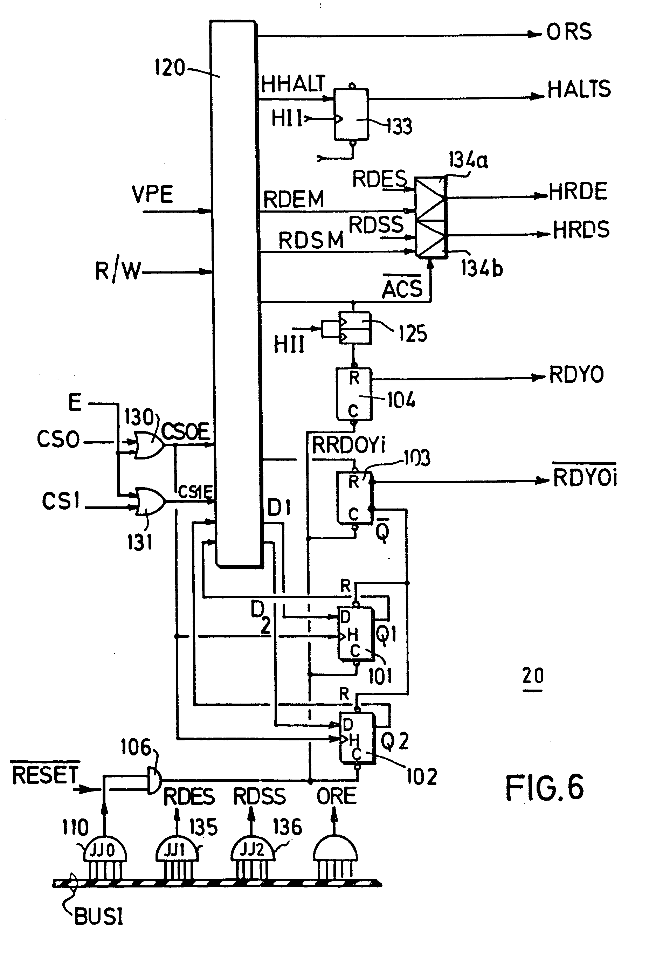

Il est possible aussi comme cela est montré à la figure 5 de connecter la partie ESCLAVE d'un processeur PSI30 de l'invention à un processeur classique 90 par exemple le 6801 de MOTOROLA. Pour cette connexion, l'accès RDYO du processeur PSI30 est relié à l'accès IRQ du processeur 90. Les accès CS0, CS1 sont reliés aux accès AD7-6 de processeur 6801, les accès R/$\overline{W}$ sont reliés entre eux tandis que les accès E le sont par l'intermédiaire d'un inverseur INV. Il convient de noter la connexion un peu particulière du processeur PSI11 à la figure 3. En effet les accès AD0-7 sont connectés à la fois à la partie MAITRE du processeur PSI10 et à la mémoire 80. Pour permettre d'une part l'engendrement du code d'adresse pour la mémoire 80 par le processeur PSI11 et les échanges entre les processeurs PSI10 et PSI11, le processeur PSI11 est mis dans un mode appelé PE (pseudo esclave) alors que pour les échanges simples le mode est appelé VE (vrai esclave) figure-2 PSI2 .

On constate toujours en ce qui concerne le processeur PSI11 que les accès D0-7 et D8-15 sont concaténés de sorte que des mots de 16 bits peuvent être échangés avec la mémoire 80 organisée à cet effet en mots de 16 bits aussi. Pour mettre le processeur dans le mode PE ou VE et pour la concaténation des accès D0-7 et D8-15, on utilise une instruction transmise par la ligne BUSI qui, décodée et enregistrée par un circuit 82 fournit des signaux VPE et BCS pour indiquer le mode :

VPE = 0 pour le mode VE

VPE = 1 pour le mode PE

et la concaténation :

BCS = 0 D0-7, D8-15 concaténés

BCS = 1 D0-7, D8-15 séparés.

Dans le cas où l'on connecte des lignes BUS séparées aux accès D0-7 et D8-15, le tableau I suivant donne la sélection de ces accès en fonction des signaux CS3 et CS2.

EP 0 171 856 B1

TABLEAU I

| CS3 | CS2 | D0-7 | D8-15 |
|---|---|---|---|
| 0 | 0 | BZ | HZ |
| 0 | 1 | HZ | BZ |
| 1 | 0 | HZ | BZ |
| 1 | 1 | HZ | BZ |
| où<br>HZ : haute impédance<br>BZ : basse impédance | | | |

En pratique, il est préférable de connecter le processeur en mode PE sur les accès D0-7 et les autres processeurs en mode VE sur les accès D8-15 de sorte que le processeur en mode PE puisse accaparer ses accès AD0-7 sans perturber les autres processeurs en mode VE. Si on se reporte à la figure 2, le processeur PSI4 peut être en mode PE alors que les processeurs PSI2 et PSI3 sont en mode VE.

Dans l'architecture arborescente montrée à la figure 4, il faut prendre des précautions lorsqu'un processeur en mode PE commande un autre processeur en mode PE, cette combinaison pouvant engendrer des blocages montants dans la hiérarchie. Ces blocages peuvent être évités en utilisant "la programmation dynamique". C'est-à-dire qu'en cours de programme on passe du mode VE à PE et réciproquement. Le processeur en mode PE qui prend l'initiative de vérifier selon une procédure décrite ci-après la disponibilité de la BAL du processeur qui lui est connecté en mode PE, se met en mode VE. Ainsi il ne pourra plus être interrompu par le processeur en mode MAITRE qui lui est connecté.

Le circuit séquentiel de commande est montré en détail à la figure 6. Il se compose tout d'abord de deux bascules d'états 101 et 102 de type D qui fournissent à leur sortie des signaux Q1 et Q2, la valeur de ces signaux définissant donc les états du circuit séquentiel selon le tableau II ci-dessous.

TABLEAU II

| Q1 | Q2 | référence de l'état | Commentaires |
|---|---|---|---|
| 0 | 0 | $\alpha$ | La boîte aux lettres (12,14) est libre et donc disponible au circuit maître. |
| 0 | 1 | $\beta$ | La boîte aux lettres est effectivement connectée extérieurement au circuit maître. |
| 1 | 0 | | Etat illégal. |
| 1 | 1 | $\gamma$ | La boîte aux lettres est connectée intérieurement à l'organe de traitement 10. |

Deux autres bascules 103 et 104 de type D définissent respectivement le signal RDYO et un signal $\overline{RDYOi}$. Les bascules 101, 102, 103 et 104 peuvent être mises à "0" par un signal provenant d'une porte "ET" 106. Cete porte 106 munie de deux entrées reçoit sur l'une de celles-ci un signal $\overline{RESET}$ rendu actif à la mise en route du processeur et sur l'autre, le signal de sortie d'un décodeur d'instruction 110 connecté sur la ligne BUSI ; ainsi par une certaine instruction JJ0 il est possible de donner la valeur "0" à la valeur RDYO ainsi que d'ailleurs aux autres valeurs $\overline{RDYOi}$, Q1 et Q2. Les bascules 101 et 102 peuvent être mises à "1" par le signal à la sortie $\overline{Q}$ de la bascule 103, c'est-à-dire le signal RDOYi. Les entrées D des bascules 101 et 102 reçoivent respectivement des signaux D1 et D2 élaborés par un circuit de logique programmée 120 ; ce circuit élabore aussi un signal RRDOYi pour la mise à "1" de la bascule 103. Pour la mise à "1" de la bascule 104, un signal $\overline{ACS}$ est appliqué à l'entrée R de cette bascule par l'intermédiaire d'un organe de retard 125, retard égal à la durée de deux instructions retard fixées par un signal d'horloge HII dont la période est égale à la durée d'une instruction. Les entrées pour basculement H des bascules 101 et 102 sont reliées à la sortie d'une porte OU 130 à deux entrées dont l'une reçoit le signal $\overline{CS0}$ et l'autre le signal E. Le signal de sortie CS0E de cette porte est utilisé aussi par le circuit 120. Un signal CS1E utilisé aussi par le circuit 120 est formé par une autre porte "OU" 131 qui reçoit sur ses deux entrées les signaux $\overline{CS1}$ et E.

Une cinquième bascule de type D, référencée 133 dont l'entrée de signaux d'horloge reçoit le signal HII fournit le signal HALTS. L'entrée D de cette bascule 139 reçoit un signal H HALT issu du circuit 120. Un

6

multiplexeur double à deux positions, 134a et 134b fournit sur ses deux sorties les signaux HRDE et HRDS. Les signaux HRDE et HRDS s'identifient, lorsque le multiplexeur est dans sa première position,aux signaux RDES et RDSS provenant de deux décodeurs d'instructions 135 et 136 respectivement et s'identifient aux signaux RDEM et RDSM lorsque le multiplexeur est dans sa deuxième position. C'est le signal ACS qui détermine les positions du multiplexeur 134a, 134b. Un décodeur 138 fournit le signal ORE.

Le circuit 120 est câblé pour effectuer les opérations logiques suivantes :

$$
\begin{aligned}
ORS \quad &= \quad \overline{ACS} + CS0E + CS1E + R/\overline{W} \\
H\ HALT &= \quad VPE.\overline{\overline{Q1}.Q2} \\
RDEM \quad &= \quad CS0E + CS1E + \overline{ACS} + R/\overline{W} \\
RDSM \quad &= \quad CS0E + CS1E + \overline{ACS} + R/\overline{W} \\
\overline{ACS} \quad &= \quad \overline{\overline{Q1}.Q2} \\
\overline{D1} \quad &= \quad \overline{\overline{Q1}.\overline{Q2}} + \overline{\overline{Q1}.Q2}.\overline{CS0E}.\overline{CS1E} + Q1.\overline{Q2} \\
\overline{D2} \quad &= \quad \overline{\overline{Q1}.\overline{Q2}}.\overline{CS0E}.CS1E + Q1.\overline{Q2} \\
\overline{RRDYOi} \quad &= \quad \overline{CS0E}.\overline{CS1E}.\overline{\overline{Q1}.Q2}
\end{aligned}
$$

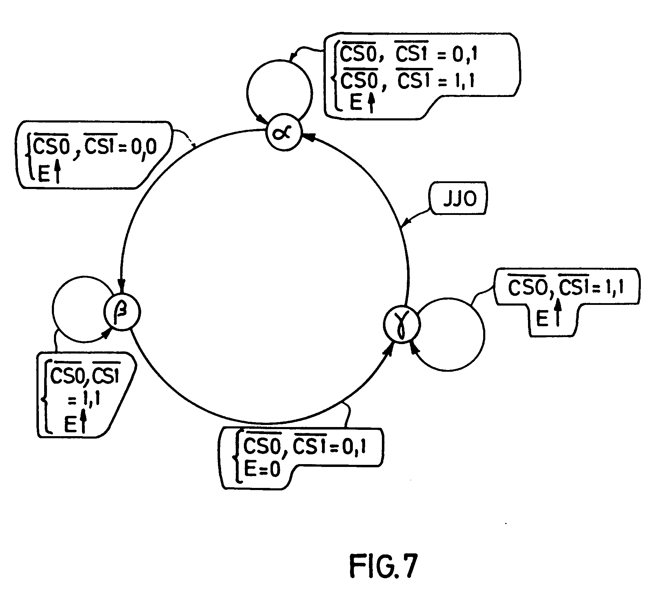

Le circuit séquentiel 20 possède trois états stables $\alpha$, $\beta$ et $\gamma$ (revoir le Tableau II) ceci est représenté à la figure 7.

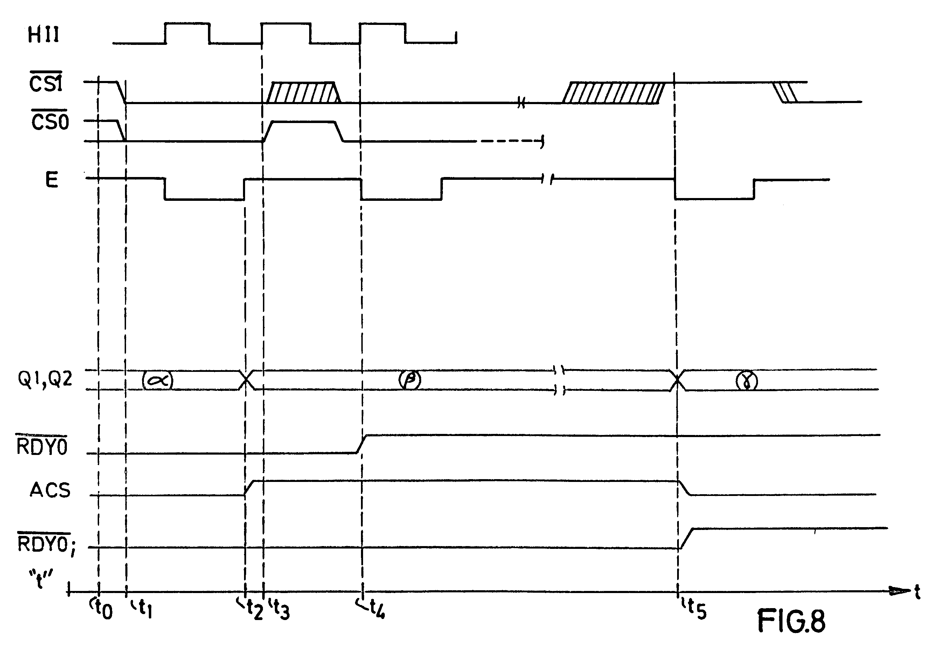

Le circuit 20 est mis à l'état "$\alpha$" par une instruction JJ0 véhiculée par la ligne BUSI décodée par le décodeur 110 ; ceci provoque la mise à zéro des bascules 101, 102, 103 et 104 ; on se trouve donc à l'instant t0 à la figure 8. Pour faire passer le circuit séquentiel 20 de l'état $\alpha$ à l'état $\beta$ deux conditions doivent être remplies : il faut que les signaux $\overline{CS1} = \overline{CS0} = 0$ d'une part, ce qui survient à l'instant t1 à la figure 8 et qu'il y ait une transition montante du signal E d'autre part, ce qui survient à l'instant t2. Le signal $\overline{ACS}$ prend la valeur "1" ce qui, après deux fronts montants du signal HII survenant aux instants t3 et t4 fait prendre (à t4 donc) la valeur "1" au signal RDYO. Ce signal détecté par le maître indique à ce dernier qu'il peut alors émettre vers l'esclave et recevoir aussi de l'information. Après cet échange d' informations le circuit maître envoie le signal $\overline{CS0}$, $\overline{CS1}$ = O, 1 ce qui survient à l'instant t5 validé par la valeur "0" du signal E ; le signal RDYOi prend alors la valeur "1" et le signal RDYO la valeur "0" ; l'accès est donné alors à l'organe de traitement de la partie ESCLAVE. Le circuit séquentiel 20 est conçu pour que les états $\alpha$, $\beta$ et $\gamma$ soient stables quelles que soient les valeurs inopinées des signaux $\overline{CS0}$, $\overline{CS1}$. Ainsi si à l'état $\alpha$, les signaux $\overline{CS0}$, $\overline{CS1}$ = O,1 ou $\overline{CS0}$, $\overline{CS1}$ = 1,1 et au front montant de E, on reste à l'état $\alpha$. Si à l'état $\beta$ les signaux $\overline{CS0}$, $\overline{CS1}$ = 1,1 au front montant de E, on reste à cet état $\beta$. Si à l'état $\gamma$, on est dans les circonstances précédentes, on reste à l'état $\gamma$.

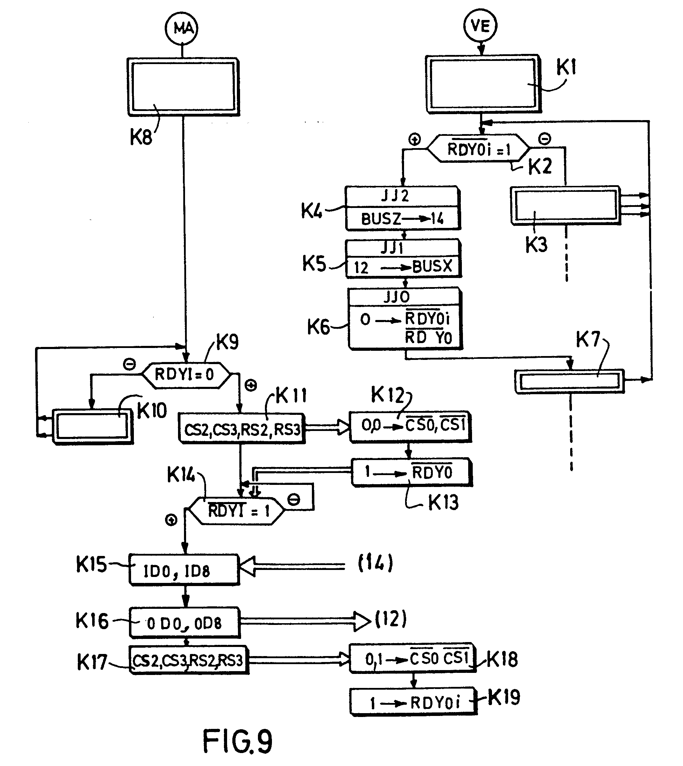

La figure 9 montre un ordinogramme expliquant les échanges d'informations entre un circuit maître et un circuit esclave dans le mode VE (vrai esclave). Cet ordinogramme comporte différentes cases portant des références commençant par la lettre K. La case K1 représente tout un programme de traitement de signal effectué par le circuit VE et au cours de ce traitement, dans ce programme il est jugé utile de communiquer avec le circuit maître ; donc il faut mettre des données et lire dans les registres "bottes aux lettres". Pour cela, on teste par voie logicielle (case K2) la valeur du signal $\overline{RDYOi}$. Si celle-ci n'est pas égale à "1" la boîte aux lettres n'est pas disponible et l'on effectue un autre traitement, indiqué par la case K3, dans lequel il est prévu des branchements vers la case K2. Si la valeur $\overline{RDYOi}$ = 1 on charge alors le registre 14 par trois instructions successives JJ2 (case K4) et on lit le registre 12 par trois instructions successives JJ1 (case K5) ; puis, par l'instruction JJ0 on impose la valeur "0" aux signaux $\overline{RDYO}$ et $\overline{RDYOi}$. Le circuit VE peut continuer à exécuter d'autres programmes, ce qui est indiqué par la case K7 et dans ces programmes il n'est pas exclu que l'on puisse revenir à la case K2. Le circuit maître exécute de son côté un programme de traitement représenté par la case K8. S'il a besoin de communiquer avec un circuit esclave il teste (case K9) par voie logicielle la valeur du signal $\overline{RDYI\ (0, 1, 2)}$ qui est affecté à ce circuit esclave ; ce signal est représenté alors par $\overline{RDYI}$ à cette case K9. Si ce signal n'est pas égal à "O" cela signifie que du côté du circuit ESCLAVE la boîte aux lettres n'est pas disponible ; le circuit maître peut donc effectuer un autre ou la suite du même programme (case K10). Si le signal $\overline{RDYI}$ est égal à "O" alors on élabore (case K11) par voie logicielle, en envoyant un code sur la ligne BUSAD pour obtenir des signaux convenables CS2, CS3, RS2 et RS3 qui, du côté du circuit esclave se traduisent par $\overline{CS0}$, $\overline{CS1}$ = 0,0 (case K12) ; comme on l'a vu plus haut ce la provoque la montée du signal $\overline{RDYO}$ (case K13). Cette montée est détectée du côté maître par un test logiciel (case K14). Le circuit maître considérant la boîte aux lettres comme un périphérique,provoque l'état passant des amplificateurs 32 et/ou 36 en mettant les signaux ID0 et/ou ID8 à l'état actif, vient dans un premier temps lire les données contenues dans la boîte aux lettres (case K15) et dans un deuxième temps la charge de données (case K16). Pour cela les amplificateurs 34 et/ou 38 sont mis à l'état passant par les signaux OD0 et/ou OD8 actifs. A la case K17, l'apparition d'un code formé par les signaux CS2, CS3, RS2 et RS3 provoque du côté du circuit esclave un signal $\overline{CS0}$, $\overline{CS1}$ = 0,1 case K18 qui provoque l'apparition de la valeur 1 du signal $\overline{RDYOi}$ (case K19) signifiant que la boîte aux lettres est disponible pour le circuit esclave.

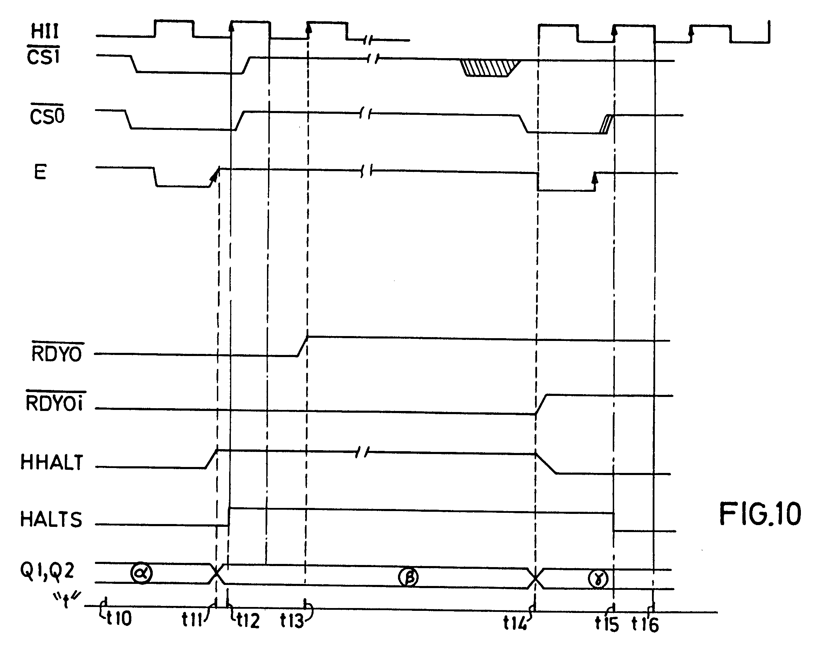

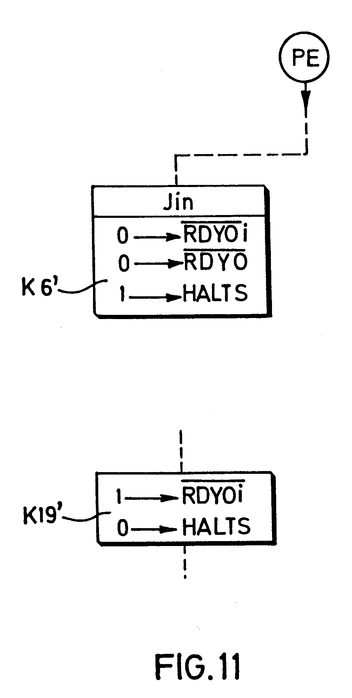

Dans le mode de connexion PE, lorsque la boîte aux lettres est donnée au maître il ne faut plus a lors que la mémoire extérieure associée au côté ESCLAVE soit adressée puisque cela n'est plus compatible avec un échange d'informations entre le circuit maître et le pseudo esclave ; pour éviter cette incompatibilité il faut mettre l'organe de traitement en arrêt dès que la boîte aux lettres est connectée au maître. Les états $\alpha$, $\beta$, $\gamma$ du circuit séquentiel restent les mêmes. Pour ce mode PE on se reporte au diagramme-temps de la figure 10 ; on est à l'état $\alpha$ à l'instant t10 ; l'état $\beta$ est défini dès que le signal E prend la valeur "1" (instant t11) après que les signaux $\overline{CS0}$, $\overline{CS1}$ aient pris la valeur 0,0 ; la montée du signal E correspond à celle du signal HHALT de sorte que lorsque le front montant du signal HII survient à l'instant t12, le signal HALTS à la sortie de la bascule 133 prend la valeur "1" ce qui va interrompre à l'instant t13 le déroulement du fonctionnement de l'organe de traitement, ceci tant que dure l'état $\beta$. Cet état $\beta$ cesse dès que les signaux $\overline{CS1}$, $\overline{CS0}$ prennent les valeurs "1" et "0" validées par la valeur "0" du signal E (instant t14) et l'on passe ainsi à l'état $\gamma$. Le signal HHALT prend la valeur "0" et le signal $\overline{RDYOi}$ la valeur "1" (comme dans te cas du mode de connexion VE). Ce signal HALT provoque, à l'instant t15 où survient le front montant du signal HII, la valeur "0" du signal HALTS ce qui autorise la reprise du fonctionnement de l'organe de traitement ; celui-ci peut alors accéder à la boîte aux lettres comme cela a déjà été dit dès l'instant t16. L'ordinogramme montrant les échanges est représenté à la figure 11. Seules sont modifiées les cases K6 et K19 qui deviennent sur la figure 11 les cases K6' et K19' respectivement ; ces cases mettent en évidence l'évolution du signal HALTS.

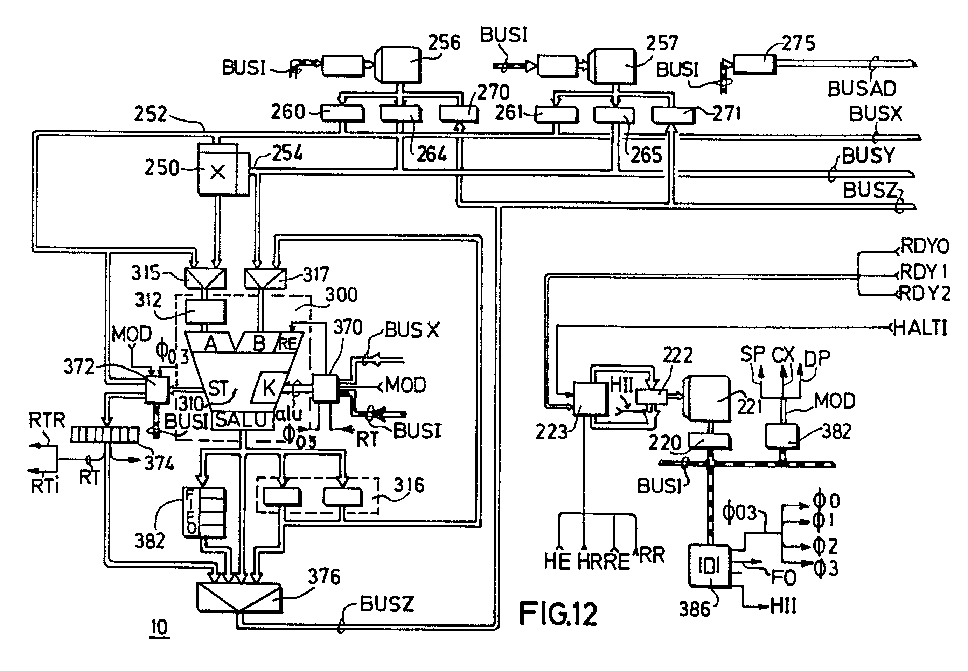

La figure 12 représente un organe de traitement 10 utilisé de préférence dans le processeur conforme à l'invention ; cet organe est décrit avec plus de détail dans des demandes de brevet déposées conjointement avec la présente demande au nom de la demanderesse. Les différentes opérations à effectuer sont déterminées par des codes d'instructions véhiculés par une ligne commune BUSI connectée à la sortie d'un registre d'instructions 220.

Le registre d'instructions 220 est relié à la sortie d'une mémoire programme 221 adressée par un compteur programme 222 dont le contenu peut varier d'une unité en fonction d'un signal d'horloge HII dont la période est celle de la durée d'une instruction et dont le contenu peut être totalement modifié par un circuit séquenceur 223.

L'organe 10 est élaboré autour d'une architecture à trois lignes communes BUSX, BUSY et BUSZ. La Ligne BUSX est reliée notamment à un organe de multiptication 250 par son entrée 252 pour premier opérande, et la ligne BUSY est aussi reliée à cet organe de multiplication 250 par son entrée 254. Ces lignes BUSX et BUSY permettent d'appliquer en même temps à cet organe 250 des opérandes provenant de mémoires vives 256 et 257 ; les sorti es de données de ces mémoires sont reliées à la ligne BUSX par l'intermédiaire de registres tampons 260 et 261 et à la ligne BUSY par l'intermédiaire de registres 264 et 265. Les données à emmagasiner dans ces mémoires 256 et 257 proviennent de registres tampons 270 et 271 respectivement, alimentés tous deux par la ligne BUSZ. Les codes d'adresse de ces mémoires 256 et 257 proviennent de pointeurs d'adresse 280 et 281 d'une structure décrite dans la demande de brevet français déposée au nom de la demanderesse sous le numéro 84 03 813 et aussi dans une demande de brevet n° 84 12 801 déposée conjointement avec la présente demande. On a prévu aussi un troisième pointeur 275 utilisé notamment pour adresser une mémoire vive extérieure lorsque le processeur est dans le mode pseudo-esclave PE. L'organe de traitement 10 comporte une unité arithmétique et logique 300 pouvant fonctionner, tout comme l'organe de multiplication 250, selon différents modes de calcul (modes réel, complexe et simple précision) ; on pourra à ce sujet se reporter à la demande de brevet déposée simultanément avec la présente demande. Cette unité 300 est constituée à partir d'une unité arithmétiqueet logique 310 comportant une entrée d'opérande A reliée à la sortie d'une unité de décodage 312 (barrel shifter) dont l'entrée est reliée soit à la sortie de l'organe de multiplication 250 soit à la ligne BUSX, le choix de cette relation étant déterminé par la position d'un multiplexeur 315. L'entrée d'opérante B peut être reliée soit à la ligne BUS soit à la sortie d'un ensemble d'accumulateurs 316 le choix étant déterminé par la position d'un multiplexeur 317. Pour fonctionner selon les différents modes de calcul, il est prévu un circuit de gestion de retenue 370 pour fournir la retenue adéquate à l'entrée RE de l'unité 310. Cet organe détermine le code de commande "alu" à appliquer à l'entrée K de l'unité 310 pour que les différentes opérations véhiculées proposées par des codes d'instructions véhiculés par la ligne BUSI soient exécutées ; un circuit de gestion du registre de statut 372 fournit les informations à un registre de statut 374. Un multiplexeur 376 connecte sur la ligne BUSZ des informations provenant soit du registre 374 soit de la sortie SALU de l'unité 310, soit de l'ensemble d'accumulateurs 316 et soit à la sortie d'une mémoire 382 du type première donnée entrée, première donnée sortie (mémoire FIFO). L'organe comporte aussi un circuit détecteur de mode 382 branché sur la ligne BUSI pour fournir sur l'un des fils SP, CX et DP un signal indiquant que l'on fonctionne en mode réel complexe et en double précision respectivement. Cet ensemble de signaux regroupés dans un ensemble de fils MOD est appliqué aux circuits 370 et 372 pour que la gestion de la commande de l'unité 310 et celle du registre 370 s'effectuent convenablement. De même, un circuit d'horloge 386 fournit différents signaux $\emptyset_i$ pour la commande des différents circuits et notamment aux circuits 370 et 372.

Le circuit séquenceur 223 reçoit les signaux $\overline{RDY0}$, $\overline{RDY1}$ et $\overline{RDY2}$ qui sont testés par des instructions de test prévues dans le programme contenu dans la mémoire 221. Le signal HALTS stoppe d'une manière conventionnelle le fonctionnement de l'organe 10. Le compteurprogramme 222 est figé et le processeur, exécute une instruction spéciale de NOP.

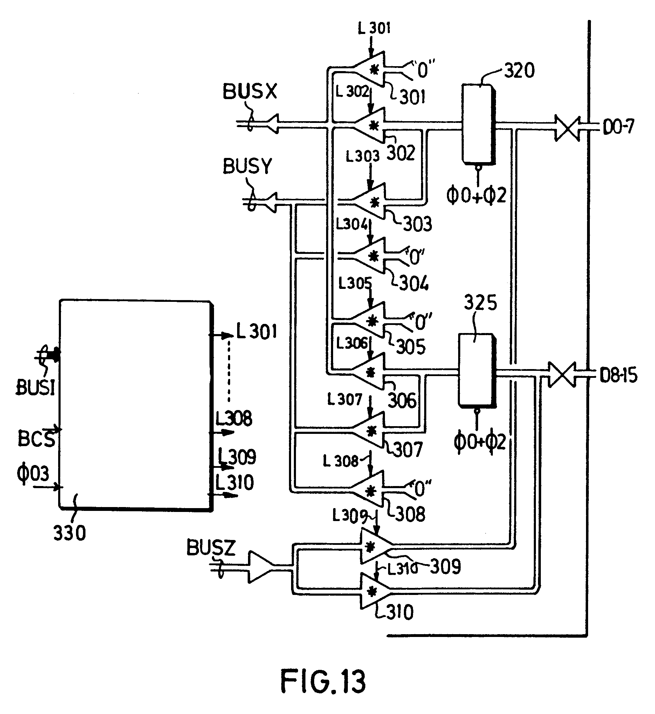

La figure 13 montre comment sont connectés les accès D0-7 et D8-15 aux lignes communes BUSX,BUSY et BUSZ. Ces différentes lignes transmettent des mots binaires sur 16 bits. Les données arrivant sur les accès D0-7 et D8-15 peuvent être dirigées soit sur la ligne BUSX soit sur la ligne BUSY. De même les données provenant de la ligne BUSZ peuvent être transmises sur les accès D0-7 et/ou D8-15. Pour cela on a prévu une pluralité d'amplificateurs à trois états 301, 302,... 310 coopérant avec deux registres de transfert 320 et 325 dont les entrées sont reliées respectivement aux accès D0-7 et D8-15. La sortie du registre 320 est reliée aux entrées des amplificateurs 301 et 302 alors que la sortie du registre 325 l'est aux entrées des amplificateurs 306 et 307. Les signaux aux entrées des amplificateurs 301 et 308 sont des zéros. La ligne BUSX est connectée aux sorties des amplificateurs 301, 302, 305 et 306, la ligne BUSY est connectée aux sorties des amplificateurs 303, 304, 307 et 308. Les accès D0-7 et D8-15 sont reliés respectivement aux sorties des amplificateurs 309 et 310 dont les entrées sont reliées à la ligne BUSZ. Les registres de transfert sont commandés par des signaux $\emptyset0 + \emptyset2$ d'un circuit de commande 330 qui, à partir des informations de la ligne BUSI, du signal BCS et des signaux $\emptyset03$, élabore les commandes à l'état passant ou bloqué L301 à L311 pour les amplificateurs 301 à 311. Les accès D0-7 et D8-15 peuvent être séparés et la sélection se fait par les adresses différentes (voir Tableau I). Il est important de noter que, dans ce dernier cas, l'accès D0-7 est connecté toujours aux poids faibles des BUS X, Y, Z et les 8 bits de poids forts sont forcés à zéro par les amplificateurs à trois états 301, 304, lorsqu'il s'agit de connecter l'accès D0-7 sur les lignes BUSX et BUSY respectivement. De la même façon, l'accès D8-15 est toujours connecté aux poids forts des BUS X, Y, Z et les amplificateurs 305, 308 assurent le ni veau zéro sur les poids faibles des lignes BUSX et BUSY respectivement.

Le tableau III ci-après résume les commandes de passage en basse impédance des amplificateurs à trois états 301 à 310. Il faut noter qu'un niveau zéro ("0") sur la commande d'un amplificateur le met en basse impédance.

TABLEAU III

| 1) D0-7 et D8-15 concaténés = D0-15 | | | | | | | | | | |
|---|---|---|---|---|---|---|---|---|---|---|
| | 301 | 302 | 303 | 304 | 305 | 306 | 307 | 308 | 309 | 310 |
| D0-15 sur BUSX | 1 | 0 | 1 | 1 | 1 | 0 | 1 | 1 | 1 | 1 |
| D0-15 sur BUSY | 1 | 1 | 0 | 1 | 1 | 1 | 0 | 1 | 1 | 1 |
| BUSZ sur D0-15 | 1 | 1 | 1 | 1 | 1 | 1 | 1 | 1 | 0 | 0 |
| 2) D0-7 et D8-15 séparés | | | | | | | | | | |
| | 301 | 302 | 303 | 304 | 305 | 306 | 307 | 308 | 309 | 310 |
| D0-7 sur BUSX | 0 | 0 | 1 | 1 | 1 | 1 | 1 | 1 | 1 | 1 |
| D8-15 sur BUSX | 1 | 1 | 1 | 1 | 0 | 0 | 1 | 1 | 1 | 1 |
| D0-7 sur BUSY | 1 | 1 | 0 | 0 | 1 | 1 | 1 | 1 | 1 | 1 |
| D8-15 sur BUSY | 1 | 1 | 1 | 1 | 1 | 1 | 0 | 0 | 1 | 1 |
| BUSZ sur D0-7 | 1 | 1 | 1 | 1 | 1 | 1 | 1 | 1 | 0 | 1 |
| BUSZ sur D8-15 | 1 | 1 | 1 | 1 | 1 | 1 | 1 | 1 | 1 | 0 |

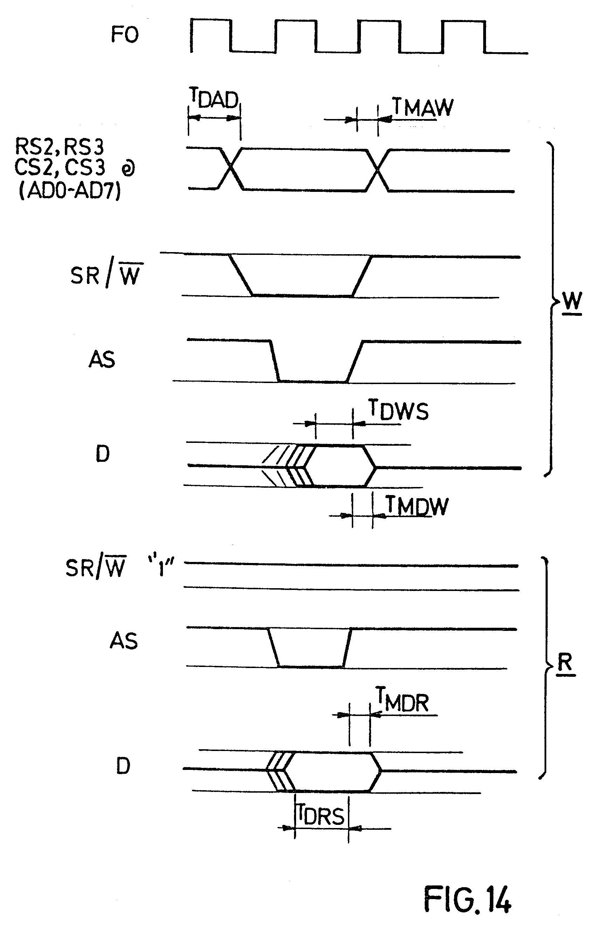

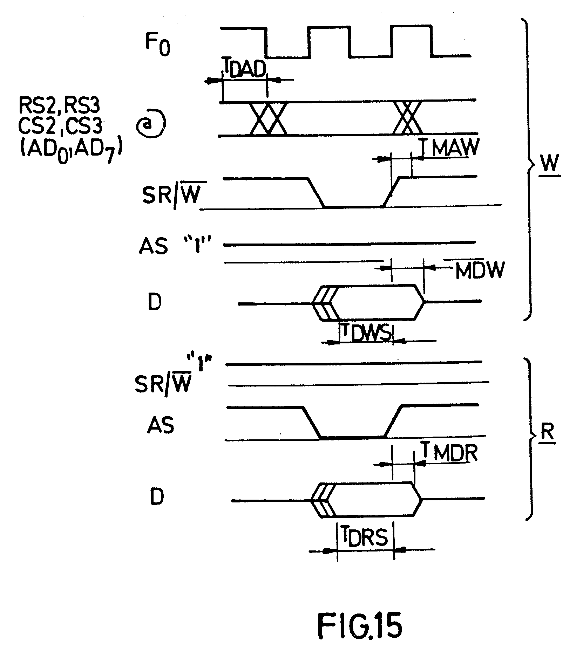

La figure 14 montre un diagramme-temps des différents signaux du BUS maître c'est-à-dire connecté aux accès D0-7 et/ou D8-15. En W on a représenté les signaux en écriture et en R, en lecture. On remarque que les adresses sont validées par l'état zéro du signal AS et le signal SR/$\overline{W}$ indique le sens du transfert. Ce diagramme est valable lorsqu'un processeur échange des données avec un autre processeur. Mais, lorsqu'un processeur échange des données avec une mémoire externe, le diagramme est légèrement différent. Ce changement est nécessaire pour assurer la compatibilité du processeur avec la mémoire externe sans éléments extérieurs. Ce diagramme-temps est montré à la figure 15. Les différences par rapport au précédent sont les suivantes :

A - SR/$\overline{W}$ est synchronisé par le deuxième front montant de FO

B - AS ne passe pas à "0" pour une écriture.

Le tableau IV ci-dessous donne la définition des temps portés sur les figures 14 et 15.

TABLEAU IV

| Temps | Description | MIN | MAX |
|---|---|---|---|
| $T_{DAD}$ | Temps d'accès des adresses | | 40 ns |
| $T_{MAW}$ | Maintien des adresses de WE haut | 5 ns | |
| $T_{DWS}$ | Donnée stable à WE haut | 30 ns | |
| $T_{MDW}$ | Maintien des données de WE haut | 5 ns | |
| $T_{DRS}$ | Donnée stable à AS haut | 35 ns | |
| $T_{MDR}$ | Maintien des données de AS haut | 5 ns | |

Une instructions spéciale transmise par la ligne BUSI est prévue pour que le processeur puisse se mettre en relation avec un autre processeur ou avec une mémoire vive extérieure.

Il convient de remarquer que les mémoires internes 256 et 257 peuvent être utilisées en parallèle avec la mémoire externe. Ceci permet de réduire le temps d'exécution de certains algorithmes.

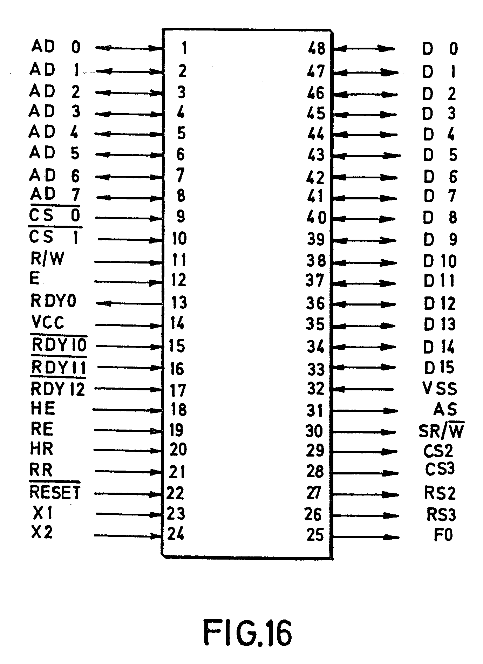

La figure 16 montre les 48 broches du processeur de l'invention. Les broches VCC et VSS sont celles où l'on applique la tension d'alimentation ; X1 et X2 sont les broches pour connecter le quartz et le signal F0 est dérivé de ce quarts. On notera la présence de broches HE, HR, RE et RR ; grâce à ces broches on peut enregistrer dans des registres respectifs des transitions descendantes par exemple. Chacun de ces registres est remis à zéro après un test par le séquenceur 223 auquel ces broches sont reliées. Il est ainsi possible de synchroniser le déroulement du programme interne par des horloges externes.

**Revendications**

1. Processeur pour le traitement de signal et prévu pour être intégré en un seul module et destiné à être associé à d'autres circuits de traitement de signal (notamment d'autres processeurs) pour former une structure de multitraitement hiérarchisée, ce processeur comportant un organe de traitement de signal (10) opérant selon des instructions transmises par une ligne (BUSI), une partie MAITRE destinée à être connectée à au moins un circuit esclave, une partie ESCLAVE munie d'un accès (AD0-7) pour être notamment raccordé à un circuit de traitement de signal maître, d'une première mémoire tampon (12) dans laquelle les données provenant du circuit de traitement maître d'un circuit de traitement de signal de niveau supérieur dans la structure hiérarchisée par ledit accès (AD0-7) peuvent être inscrites et lues pour être traitées par l'organe de traitement, d'une deuxième mémoire tampon (14) dans laquelle les données traitées par l'organe de traitement peuvent être inscrites, puis lues pour être dirigées par l'intermédiaire dudit accès (AD0-7) vers le circuit de traitement maître de niveau supérieur et d'un circuit séquential de commande (20) pour que l'accès à ces mémoires (12, 14) soit affecté audit organe de traitement et audit circuit de traitement maître de niveau supérieur, caractérise en ce que le circuit séquentiel fournit tant à l'organe de traitement qu'au circuit de traitement maître de niveau supérieur en succesion cyclique des signaux de disponibilité de la première et de la deuxième mémoire tampon et de connexion de ces mémoires à l'organe de traitement ou au circuit de traitment maître de niveau supérieur.

2. Processeur selon la revendication 1, caractérisé en ce que l'accès (AD0-7) peut être alimenté directement par des codes d'adresse engendrés dans le processeur pour l'adressage d'une mémoire externe.

3. Processeur selon la revendication 1 ou 2, caractérisé en ce que la partie MAITRE comporte des circuits de sélection pour sélectionner l'échange d'informations entre lui et un parmi une pluralité de circuits ESCLAVES.

4. Processeur selon la revendication 3, caractérisé en ce que les sorties des circuits de sélection sont associées aux accès (AD0-7) pour étendre le champ d'adressage d'une mémoire extérieure.

5. Processeur selon l'une des revendications 1 à 4, caractérisé en ce que la partie ESCLAVE peut être mise en deux modes de connexion PE et VE, dans le mode VE le processeur étant assujetti directement à un circuit maître et dans le mode PE le processeur étant d'une part assujetti à un circuit maître par les accès (AD0-7) et d'autre part capable d'adresser une mémoire qui lui est associée.

6. Processeur selon l'une des revendications 1 à 5, caractérisé en ce que la partie MAITRE comporte deux séries d'accès (D0-7, D8-15) qui peuvent être concaténés ou non.

7. Processeur selon l'une des revendications 1 à 6, caractérisé en ce que le circuit séquentiel de commande est un circuit à trois états principaux :
   - un premier état imposé par voie logicielle au moyen de l'organe de traitement et qui rend disponibles les registres tampons,
   - un deuxième état imposé par le circuit maître pour s'accaparer lesdits registres tampons,
   - un troisième état selon lequel les registres tampons sont rendus disponibles au processeur après que le circuit maître les ait libérés.

8. Structure de multitraitement comportant au moins un tel processeur selon l'une des revendications 1 à 6.

## Claims

1. A signal processor intended to be integrated in a single module and to be associated with other signal processing circuits (particularly other processors) in order to form a hierarchized multiprocessing structure, which processor comprises a signal processing member (10), operating in conformity with instructions transported via a line (BUSI), a MASTER section to be connected to at least one slave circuit, a SLAVE section provided with a port (AD0-7) for connection notably to the master signal processing circuit, a first buffer memory (12) in which the data originating via said port (AD0-7), from the master processing circuit of a signal processing circuit of higher level in the hierarchized structure, can be written and read so as to be processed by the processing member, a second buffer memory (14) in which the data processed by processing member can be written and then read so as to be applied, via said port (AD0-7), to the master processing circuit of higher level, and a sequential control circuit (20) which ensures that the access to said memories (12, 14) is allocated to said processing member and to said master processing circuit of higher level, characterized in that the sequential circuit supplies the processing member as well as the master processing circuit of higher level in cyclic succession with signals for indicating the availability of the first and the second buffer memory and for connecting these memories to the processing member or to master processing circuit of higher level.

2. A processor as claimed in Claim 1, characterized in that the port (AD0-7) can be fed directly with address codes produced in the processor for the addressing of an external memory.

3. A processor as claimed in Claim 1 or 2, characterized in that the MASTER section includes selection circuits for selecting the data exchange between itself and one of a number of SLAVE circuits.

4. A processor as claimed in Claim 3, characterized in that the outputs of the selection circuits are associated with the ports (AD0-7) in order to extend the addressing field of an external memory.

5. A processor as claimed in any one of Claims 1 to 4, characterized in that the SLAVE section can be set to two connection modes PE and VE, in the mode VE the processor being subjected directly to a master circuit and in the mode PE the processor being on the one hand subjected to a master circuit via the ports (AD0-7) and on the other hand being capable of addressing a memory associated with itself.

6. A processor as claimed in any of Claims 1 to 5, characterized in that the MASTER section includes two series of ports (D0-7,D8-15) which may or may not be concatenated.

7. A processor as claimed in any one of Claims 1 to 6, characterized in that the sequential control circuit is a circuit having three main states:
   - a first state which is imposed by software by means of the processing member and which makes the buffer registers available,
   - a second state which is imposed by the master circuit in order to monopolize said buffer registers,
   - a third state in which the buffer registers are made available to the processor after the master circuit has released them.

8. A multiprocessor structure including at least one processor as claimed in any one of the Claims 1 to 6.

## Patentansprüche

1. Signalverarbeitungsprozessor zum Integrieren in einem einzigen Modul und zum Zuordnen zu anderen Signalverarbeitungsschaltungen (insbesondere zu anderen Prozessoren) zur Bildung einer hierarchischen Multiverarbeitungsstruktur, wobei dieser Prozessor eine Signalverarbeitungseinrichtung (10) enthalt, die gemäß den auf einer Leitung (BUSI) übertragenen Instruktionen arbeitet, einen Hauptteil (MAITRE) zum Verbinden mit wenigstens einer Nebenschaltung, einen Nebenteil (ESCLAVE) mit einem Zugang (ADO-7) insbesondere zum Anschließen an eine Signalverarbeitungs-Hauptschaltung, mit einem ersten Pufferspeicher (12), in dem die Daten aus der Verarbeitungshauptschaltung einer Signalverarbeitungsschaltung mit höherem Pegel in der hierarchischen Struktur über den Zugang (ADO-7) eingeschrieben und zum Verarbeiten in der Verarbeitungseinrichtung gelesen werden können,

12

mit einem zweiten Pufferspeicher (14), in dem die in der Verarbeitungseinrichtung verarbeiteten Daten eingeschrieben werden können, wonach diese Daten gelesen werden, um über den Zugang (ADO-7) nach der Hauptverarbeitungsschaltung mit höherem Pegel übertragen zu werden, und mit einer sequentiellen Steuerschaltung (20) enthält, damit der Zugang zu diesen Speichern (12, 14) der Verarbeitungseinrichtung und der Hauptverarbeitungsschaltung mit höherem Pegel zugeordnet wird, dadurch gekennzeichnet, daß die sequentielle Schaltung sowohl der Verarbeitungseinrichtung als auch der Hauptverarbeitungsschaltung mit höherem Pegel in zyklischer Aufeinanderfolge Verfügbarkeitssignale des ersten und des zweiten Pufferspeichers und Verbindungssignale dieser Speicher an die Verarbeitungseinrichtung oder an die Hauptverarbeitungsschaltung mit höherem Pegel liefert.

2. Prozessor nach Anspruch 1, dadurch gekennzeichnet, daß der Zugang (ADO-7) direkt mit Adreßcodes gespeist werden kann, die im Prozessor zum Adressieren eines externen Speichers erzeugt werden.

3. Prozessor nach Anspruch 1 oder 2, dadurch gekennzeichnet, daß der Hauptteil (MAITRE) Wählschaltungen zum Wählen des Informationsaustausches zwischen ihm und einer Schaltung aus einer Anzahl von Nebenschaltungen (ESCLAVE) enthält.

4. Prozessor nach Anspruch 3, dadurch gekennzeichnet, daß die Ausgänge der Wählschaltungen den Zugängen (ADO-7) zugeordnet sind zum Erweitern des Adreßfelds eines externen Speichers.

5. Prozessor nach einem oder mehreren der Ansprüche 1 bis 4, dadurch gekennzeichnet, daß der Nebenteil (ESCLAVE) in zwei Verbindungsmodi PE und VE gebracht werden kann, wobei im Modus VE der Prozessor direkt einer Hauptschaltung zugeordnet ist und im Modus PE der Prozessor einerseits einer Hauptschaltung über die Zugänge (ADO-7) zugeordnet ist und andererseits einen Speicher adressieren kann, die ihm zugeordnet ist.

6. Prozessor nach einem der Ansprüche 1 bis 5, dadurch gekennzeichnet, daß der Hauptteil (MAITRE) zwei Zugangsreihen (DO-7, D8-15) enthält, die möglicherweise verkettet werden können.

7. Prozessor nach einem oder mehreren der Ansprüche 1 bis 6, dadurch gekennzeichnet, daß die sequentielle Steuerschaltung eine Schaltung mit drei Hauptzuständen ist:
- mit einem ersten Zustand, der über Programmausrüstung mit Hilfe der Verarbeitungseinrichtung geschaffen wird und die Pufferregister zur Verfügung stellt,
- mit einem zweiten Zustand, der durch die Hauptschaitung geschaffen wird, um sich dieses Pufferregisters zu bemächtigen,
- mit einem dritten Zustand, gemäß dem die Pufferregister dem Prozessor zur Verfügung gestellt werden, nachdem die Hauptschaltung sie freigegeben hat.

8. Multiverarbeitungsstruktur mit wenigstens einem derartigen Prozessor nach einem der Ansprüche 1 bis 6.

FIG.1

FIG.2

FIG.3

FIG.4

FIG.5

EP 0 171 856 B1

FIG.6

20

$$\overline{CS0}, \ \overline{CS1} = 0,1$$
$$\overline{CS0}, \ \overline{CS1} = 1,1$$
$$E \uparrow$$

$$\overline{CS0}, \overline{CS1} = 0,0$$
$$E \uparrow$$

JJO

$$\overline{CS0}, \overline{CS1} = 1,1$$
$$E \uparrow$$

$$\overline{CS0}, \overline{CS1}$$
$$= 1,1$$
$$E \uparrow$$

$$\overline{CS0}, \overline{CS1} = 0,1$$
$$E = 0$$

FIG.7

FIG.8

FIG.9

FIG.10

PE

Jin

| | |
|---|---|
| 0 ⟶ $\overline{RDYO}i$ | |
| 0 ⟶ $\overline{RDYO}$ | |
| 1 ⟶ HALTS | |

K6'

| | |
|---|---|
| 1 ⟶ $\overline{RDYOi}$ | |
| 0 ⟶ HALTS | |

KI9'

# FIG.11

23

FIG.12

EP 0 171 856 B1

FIG.13

FIG.14

FIG.15

| | | | |
|---|---|---|---|
| AD 0 | 1 | 48 | D 0 |
| AD 1 | 2 | 47 | D 1 |
| AD 2 | 3 | 46 | D 2 |
| AD 3 | 4 | 45 | D 3 |
| AD 4 | 5 | 44 | D 4 |
| AD 5 | 6 | 43 | D 5 |
| AD 6 | 7 | 42 | D 6 |
| AD 7 | 8 | 41 | D 7 |
| $\overline{CS\ 0}$ | 9 | 40 | D 8 |
| $\overline{CS\ 1}$ | 10 | 39 | D 9 |
| R/W | 11 | 38 | D 10 |
| E | 12 | 37 | D 11 |
| RDY0 | 13 | 36 | D 12 |
| VCC | 14 | 35 | D 13 |
| $\overline{RDY10}$ | 15 | 34 | D 14 |
| $\overline{RDY11}$ | 16 | 33 | D 15 |
| RDY 12 | 17 | 32 | VSS |
| HE | 18 | 31 | AS |
| RE | 19 | 30 | SR/$\overline{W}$ |
| HR | 20 | 29 | CS2 |
| RR | 21 | 28 | CS3 |
| $\overline{RESET}$ | 22 | 27 | RS2 |
| X1 | 23 | 26 | RS3 |
| X2 | 24 | 25 | F0 |

# FIG.16